# EUROPÄISCHE PATENTSCHRIFT

(11) **EP 2 214 873 B1**
(45) Veröffentlichungstag und Bekanntmachung des Hinweises auf die Patenterteilung: **25.04.2012**
(21) Anmeldenummer: 09719305.6
(22) Anmeldetag: 25.02.2009
(51) Int. Cl.: B25J 19/00, B25J 13/08, B25J 9/16, B66C 23/00

(54) **MANIPULATOR ZUR UNTERSTÜTZUNG DER MANUELLEN BEWEGUNG EINER LAST UND VERFAHREN ZUM BETREIBEN EINES SOLCHEN**
MANIPULATOR FOR SUPPORTING MANUAL MOVEMENT OF A LOAD AND METHOD FOR OPERATING THE SAME
MANIPULATEUR POUR L'ASSISTANCE DU DÉPLACEMENT MANUEL D'UNE CHARGE, ET PROCÉDÉ PERMETTANT DE FAIRE FONCTIONNER UN TEL MANIPULATEUR

(30) Priorität: 08.03.2008 DE 102008013244
(43) Veröffentlichungstag der Anmeldung: 11.08.2010
(73) Patentinhaber: FESTO AG & Co. KG, 73734 Esslingen (DE)
(72) Erfinder: MERKL, Matthias, 73240 Wendlingen (DE); SCHWENZER, Reinhard, 73734 Esslingen (DE); WARBINEK, Ulrich, 73779 Deizisau (DE)
(74) Vertreter: Kocher, Mark Werner
(86) Internationale Anmeldenummer: PCT/EP2009/001331
(87) Internationale Veröffentlichungsnummer: WO 2009/112151

(56) Entgegenhaltungen:
- WO-A-2007/129782
- NL-A- 9 300 678
- US-A- 3 721 416

## Beschreibung

Die Erfindung betrifft einen Manipulator zur Unterstützung der manuellen Bewegung einer Last mit wenigstens einem an einer Haltevorrichtung für die Last angreifenden und mit dieser bewegungsgekoppelten fluidischen Zylinder zur Unterstützung der Bewegung der Last in wenigstens eine erste Bewegungsrichtung . Die Erfindung betrifft auch ein Verfahren zum Betreiben eines fluidischen Manipulators.

Derartige Manipulatoren sind beispielsweise aus der DE 19723720 A1 oder der EP 0591304 B1 bekannt. Solche Manipulatoren werden beispielsweise bei der Montage, insbesondere Fahrzeugmontage, eingesetzt, um zu montierende schwere Gegenstände, wie Achsen, Motoren, Getriebe und dergleichen, manuell von einer Zuführeinrichtung in das Fahrzeug bewegen zu können. Wenigstens ein fluidischer Zylinder dient dabei zur Kraftunterstützung der manuellen Bewegung. Bei den bekannten Manipulatoren muss der Bediener beziehungsweise Monteur die Last über eine Kraftmesseinrichtung bewegen. Schiebt er die Last über diese Kraftmesseinrichtung in eine bestimmte Richtung, so wirkt die gemessene Kraft über eine entsprechende Steuereinrichtung auf den fluidischen Zylinder ein im Sinne einer Kraftverstärkung. Nachteilig an den bekannten Anordnungen ist es, dass der Monteur die Last nicht direkt manipulieren kann, sondern systembedingt über die Kraftmesseinrichtung. Dies beeinträchtigt die freie Handhabbarkeit der Last und erschwert dadurch die Montage.

Aus der WO2007/129782 ist ein Manipulator zum Heben einer Last mit einem automatischen Gewichtsausgleich bekannt, bei dem mit Hilfe einer Doppelkolbenanordnung und einer Positionssteuerung die gewünschte Position der Last unabhängig von der Gewichtskraft der Last eingestellt werden kann. Hierzu sind der Doppelkolbenanordnung zwei Schaltventile zugeordnet, die an einer Schaltrampe anliegen und bei einer Auslenkung des Manipulators solange eine Druckerhöhung oder Druckabsenkung in der Doppelkolbenanordnung bewirken, bis die Last wieder die vorgegebene Position einnimmt.

Die NL9300678 offenbart einen druckgesteuerten Manipulator zum Heben einer Last, bei dem mit Hilfe eines Drucksensors und einer Ventilanordnung eine Position der Last konstant gehalten werden soll.

Eine Aufgabe der vorliegenden Erfindung besteht darin, einen Manipulator zur Unterstützung der manuellen Bewegung einer Last sowie ein Verfahren zum Betreiben eines derartigen Manipulators zu schaffen, bei denen die Last direkt und unmittelbar handhabbar ist, ohne dazwischengeschaltete Kraftmesseinrichtung oder andere dazwischengeschaltete Hilfsmittel.

Diese Aufgabe wird durch einen Manipulator mit den Merkmalen des Anspruchs 1 gelöst.

Da erfindungsgemäß die Kraftmessung mittels einer separaten Kraftmesseinrichtung entfällt und durch eine indirekte Wegmessun sowie eine Geschwindigkeitsmessung und/oder eine Beschleunigungsmessung am fluidischen Zylinder ersetzt wird, kann die Last bei der Montage oder sonstigen Bewegungen direkt manipuliert werden, das heißt, die Bedienperson oder der Monteur kann die Last direkt ergreifen und zylinderunterstützt in die gewünschte Richtung schieben. Die Handhabung wird dadurch wesentlich vereinfacht und erleichtert, insbesondere bei diffizilen Positionierungen. Es wird eine dynamische Kraftverstärkung bei der Handhabung der Last erzielt und die Beschleunigungswerte werden dynamisch vergrößert. Dies führt zu einer Verkürzung und damit Verbesserungen der Taktzeiten, insbesondere bei der Montage.

Durch die in den Unteransprüchen aufgeführten Maßnahmen sind vorteilhafte Weiterbildungen und Verbesserungen des im Anspruch 1 angegeben Manipulators möglich.

Zweckmäßig ist es, wenn der wenigstens eine Zylinder eine als Druckmesseinrichtung für den Kolben ausgebildete Sensoreinrichtung aufweist und wenn Mittel zur Ermittlung einer Druckänderung durch Vergleich eines Momentandruckwerts mit einem Drucksollwert vorgesehen sind. Dadurch kann ergänzend zur Ermittlung der Position des Kolbens und einfacher bzw. zweifacher Ableitung des Wegsignals für Geschwindigkeit oder Beschleunigung eine direkte Erfassung der vom Benutzer eingeleiteten Bedienkraft erfolgen. Sobald der Benutzer die Last bewegen, insbesondere anheben oder absenken, möchte und eine in die entsprechende Richtung gerichtete Bedienkraft auf die Last ausübt, kommt es zu einer Änderung des Momentandrucks. Der geänderte Momentandruck wird mit dem, vorzugsweise lastabhängigen, Drucksollwert verglichen und bei Überschreiten einer vorgebbaren,Druckschwelle erfolgt eine Regelung des Momentandrucks auf den Sollwert. Der Drucksollwert ist vorzugsweise derart eingestellt, dass die Last in einer Position bewegungslos verharrt. Durch die Einleitung der Bedienkraft und die dadurch erforderliche Nachführung des durch Bedienkrafteinwirkung veränderten Momentandrucks auf den Sollwert stellt sich insgesamt eine resultierende Kraft auf die Last ein, die zu einer Bewegung der Last führt. Diese Kraft ist die Summe der Bedienkraft und der vom Drucksollwert abhängigen Kolbenkraft. Beispielsweise weicht die resultierende Kraft von der Gewichtskraft der Last ab, so dass eine Bewegung der Last in Aufwärts- oder Abwärtsrichtung bewirkt wird. Die Bewegung der Last wird so lange fortgeführt, bis der Kolben einen Endanschlag erreicht oder der Bediener die Bedienkraft reduziert. Dadurch tritt erneut eine Änderung des Momentandrucks ein, der erneut auf den Drucksollwert nachgeführt wird. Da der Drucksollwert derart eingestellt ist, dass er lediglich die Gewichtskraft der Last kompensiert, findet ohne Vorliegen einer Bedienkraft keine Bewegung der Last statt.

Während bei einfachen Bewegungen in eine Bewegungsrichtung ein mit der Last bewegungsgekoppelter fluidischer Zylinder ausreicht, können auch zwei oder mehr fluidische Zylinder zur Unterstützung der Bewegungen der Last in zwei oder mehr Bewegungsrichtungen vorgesehen sein, um die Last variabler handhaben zu können und auch eine Kraftunterstützung in mehrere Bewegungsrichtungen zu erreichen, beispielsweise die vertikale Bewegungsrichtung, eine oder zwei horizontale Bewegungsrichtungen und/oder eine Dreh- beziehungsweise Schwenkrichtung.

Um zusätzlich zur Unterstützung der manuellen Bewegung der Last auch noch eine Lastkompensationseinrichtung zu erreichen, durch die die Last im schwebenden Zustand gehalten werden kann, wird der Druck im zur Unterstützung der vertikalen Bewegung der Last arbeitenden Zylinder zusätzlich durch eine solche Lastkompensationseinrichtung in vorteilhafter Weise geregelt. Diese ist zweckmäßigerweise als Druckregeleinrichtung ausgebildet, die insbesondere von einem Drucksollwert beaufschlagt ist, der zur Kompensation der Gewichtskraft der Last eingestellt ist.

Die Lastkompensationseinrichtung ist zweckmäßigerweise in der elektronischen Steuereinrichtung integriert und wirkt vorzugsweise auf dieselbe Ventilanordnung ein.

Der Manipulator besitzt in vorteilhafter Weise einen Haltearm zur Aufhängung der Last, an dem wenigstens ein Zylinder angreift und/oder der als Kolbenstange eines Zylinders ausgebildet ist. Dieser Haltearm ist bevorzugt als Schwenkhebel ausgebildet.

Als Ventilanordnung hat sich ein Proportionalventil als bevorzugt erwiesen oder sie enthält wenigstens ein Proportionalventil.

Vorteilhaft ist es, wenn in der Steuereinrichtung wenigstens ein zur Ansteuerung der Ventilanordnung dienendes Wertefeld abgelegt ist, in dem Losbrechdruckwerte und/oder Bewegungsdruckwerte wenigstens des fluidischen Zylinders gespeichert sind, die in Abhängigkeit von der Stellung des im jeweiligen fluidischen Zylinder verschiebbar aufgenommenen Kolbens ermittelt wurden. Mit Hilfe des wenigstens einen Wertefelds kann der Fluiddruck im fluidischen Zylinder von der Steuereinrichtung in Abhängigkeit von der Stellung des Kolbens bei Stillstand oder Bewegung des Kolbens derart gesteuert oder geregelt werden, dass stellungsabhängige Unregelmäßigkeiten im fluidischen Zylinder und sonstige Inhomogenitäten im Manipulator zumindest nahezu vollständig ausgeglichen werden und für den Bediener bei der Bewegung der Last nicht wahrnehmbar sind. Die zwischen dem fluidbeaufschlagten Kolben und der Last vorliegenden Reibungseffekte werden somit zumindest nahezu vollständig kompensiert. Die Reibungseffekte sind insbesondere von der Stellung des Kolbens im fluidischen Zylinder, von der Gewichtskraft der angehängten Last, der Bewegungsrichtung des Kolbens, von der Geschwindigkeit des Kolbens und von der Kinematik des Manipulators abhängig.

Bei einer Ausführungsform der Erfindung ist vorgesehen, dass ein in der Steuereinrichtung abgelegtes erstes Wertefeld mit Losbrechdruckwerten bei geringer Last an der Haltevorrichtung ermittelt wurde. Beispielsweise kann das erste Wertefeld ohne jegliche Last ermittelt werden, so dass lediglich das Eigengewicht des Manipulators Berücksichtigung findet. Vorzugsweise findet die Ermittlung von Werten für das Wertefeld in einer Vielzahl von Stellungen des Kolbens längs des fluidischen Zylinders statt. Die Stellungen des Kolbens werden für eine rasche Initialisierung entsprechend einer vorgebbaren minimalen Teilung gewählt. In jeder Stellung wird der Kolben ausgehend von einem Ruhezustand der Last, bei der der Drucksollwert vorliegt, beispielsweise für eine Hubbewegung mit einem ansteigenden Druck und für eine Absenkbewegung mit einem nachlassenden Druck beaufschlagt. Der jeweils unmittelbar vor Auftreten einer Bewegung des Kolbens vorliegende Momentandruck wird als Losbrechdruck für die jeweilige Bewegungsrichtung in Abhängigkeit von der Stellung des Kolbens, vorzugsweise auch in Abhängigkeit von der Last, gespeichert.

Bevorzugt wird ein in der Steuereinrichtung abgelegtes zweites Wertefeld mit Losbrechdruckwerten bei hoher Last an der Haltevorrichtung ermittelt. Bei hoher Last, insbesondere bei der Maximallast für den Manipulator, sind deutlich höhere Drücke auf den Kolben erforderlich, um die Last zu bewegen. Außerdem kommt es durch die hohe Last gegebenenfalls zur Deformationen des Manipulators und in jedem Fall zu vergrößerter Reibung in Gelenken des Manipulators. Für Lasten, deren Gewichtskraft zwischen der minimalen Last und der Maximallast liegt, können anschließend durch anteilige Berücksichtigung der für die Maximallast ermittelten Losbrechdruckwerte und Bewegungsdruckwerte individuelle Werte errechnet werden.

In weiterer Ausgestaltung der Erfindung umfasst ein in der Steuereinrichtung abgelegtes drittes Wertefeld Bewegungsdruckwerte, die bei geringer Hubgeschwindigkeit erfasst wurden. Bei geringer Hubgeschwindigkeit ist der Volumenstrom des Fluids in den fluidischen Zylinder oder aus dem fluidischen Zylinder relativ gering. Daher zeigen dynamische Verluste, wie sie beispielsweise beim Durchströmen von Ventilen, Fluidleitungen oder anderen fluidischen Komponenten auftreten können, ebenfalls nur geringe Auswirkungen. Demgegenüber treten bei hohen Hubgeschwindigkeiten, erst recht bei hohen Lasten und damit verbundenen hohen Drücken, große Volumenströme des Fluids auf, bei denen die dynamischen Verluste bedingt durch die hohen Strömungsgeschwindigkeiten und durch die möglicherweise auftretende geschwindigkeitsabhängige Leckage des Kolbens in dem fluidischen Zylinder eine erhebliche Rolle spielen können. Diese Bewegungsdruckwerte können in einem vierten Wertefeld abgespeichert werden.

Für den erfindungsgemäßen Manipulator kann vorgesehen sein, dass wenigstens ein in der Steuereinrichtung abgelegtes Wertefeld bei einer Ausfahrbewegung und/oder bei einer Einfahrbewegung des Kolbens erfasst wurde. Die Losbrechdruckwerte und die Bewegungsdruckwerte können sich für die unterschiedlichen Bewegungsrichtungen des Kolbens im fluidischen Zylinder unterscheiden. Dies hängt beispielsweise mit den am Kolben vorgesehenen Dichtungen und mit dem Druckniveau zusammen, das im fluidischen Zylinder in Abhängigkeit von der Bewegungsrichtung vorliegt.

Bevorzugt sind die Wertefelder in der Steuereinrichtung in einem mehrdimensionalen Kennfeld zusammengeführt. In dem mehrdimensionalen Kennfeld können beispielsweise jeder Stellung des Kolbens im fluidischen Zylinder sämtliche zur Verfügung stehende Werte für die unterschiedlichen Betriebszustände (Anheben, Absenken, geringe Last, große Last, ...) zugeordnet werden und in einfacher Weise abgerufen werden, wenn sie zur Steuerung oder Regelung der Ventilanordnung eingesetzt werden sollen.

Zweckmäßig ist es, wenn die Steuereinrichtung derart eingerichtet ist, dass in Abhängigkeit von der Stellung des im jeweiligen fluidischen Zylinder verschiebbar aufgenommenen Kolbens und/oder in Abhängigkeit vom Bewegungszustand des Kolbens eine Korrektur des Drucksollwerts anhand der im wenigstens einen Wertefeld abgelegten Losbrechdruckwerte oder Bewegungsdruckwerte erfolgt. Der Drucksollwert ist derjenige Wert, der für die Steuerung oder Regelung des Drucks im Kolben zugrundegelegt wird. Erfindungsgemäß ist vorgesehen, in jeder Stellung des Kolbens, insbesondere unter Berücksichtigung der Gewichtskraft der Last und/oder der Bewegungsrichtung des Kolbens und/oder der Geschwindigkeit des Kolbens, der Steuerung oder Regelung des Drucks im Kolben einen korrigierten Drucksollwert zugrundezulegen. Die Korrektur für den Drucksollwert wird unter Berücksichtigung der Reibungsverhältnisse in der gegebenen Kolbenstellung und vorzugsweise unter Einbeziehung der vom Fluiddruck (lastabhängig und bewegungsrichtungsabhängig) und/oder vom Fluidvolumenstrom (geschwindigkeitsabhängig) abhängigen dynamischen Verluste ermittelt. Die Steuereinrichtung korrigiert den Drucksollwert derart, dass der Benutzer in jeder Stellung des Manipulators mit der gleichen Bedienkraft die gleiche Bewegungsgeschwindigkeit bzw. Beschleunigung der Last erzielen kann. Somit ist durch die erfindungsgemäße Steuereinrichtung bei konstanter Bedienkraft längs des Bewegungswegs der Last auch eine konstante Bewegung der Last gewährleistet.

Für ein Verfahren zum Betreiben eines erfindungsgemäßen Manipulators sind zur Lösung der Aufgabe die folgenden Schritte vorgesehen: Initialisierung der Steuereinrichtung durch Verfahren des Kolbens zwischen einer Einfahrstellung und einer Ausfahrstellung mit einer vorgebbaren Prüfgeschwindigkeit und Speichern der zum Erreichen der Prüfgeschwindigkeit notwendigen Bewegungsdruckwerte in einem Wertefeld in der Steuereinrichtung.

Die Initialisierung kann beispielsweise bei der ersten Inbetriebnahme des Manipulators und gegebenenfalls in regelmäßigen oder unregelmäßigen zeitlichen Intervallen nach der ersten Inbetriebnahme vorgenommen werden. Sie dient der Erfassung der Charakteristik des Manipulators, insbesondere im Hinblick auf die stellungsabhängige Reibung und gegebenenfalls der Leckage des Kolbens im fluidischen Zylinder. Für die Initialisierung wird der Kolben beispielsweise aus einer Endstellung, in der die Kolbenstange weitestmöglich in den fluidischen Zylinder eingefahren ist und die als Einfahrstellung bezeichnet wird, in eine Endstellung gebracht, in der die Kolbenstange maximal aus dem fluidischen Zylinder ausgefahren ist und die als Ausfahrstellung bezeichnet wird, bewegt. Während der Bewegung, die auf eine konstante Geschwindigkeit des Kolbens geregelt wird, werden die zur Einhaltung der konstanten Geschwindigkeit des Kolbens erforderlichen Bewegungsdruckwerte in Verbindung mit der Stellung des Kolbens in der Wertetabelle abgelegt.

Vorteilhaft ist es, wenn der Halteeinrichtung eine bekannte Last, insbesondere eine Maximallast, für die Initialisierung der Steuereinrichtung zugeordnet wird. Da sowohl die Losbrechdruckwerte als auch die Bewegungsdruckwerte lastabhängig sind, ist es vorteilhaft, diese Werte mit einer großen Last, insbesondere mit der Maximallast für den Manipulator, zu ermitteln.

Bei einer Ausgestaltung der Erfindung wird die Initialisierung der Steuereinrichtung bei wenigstens zwei voneinander unterschiedlichen Prüfgeschwindigkeiten ausgeführt. Dies ermöglicht es, dynamische Verluste im Fluidsystem, insbesondere in der Ventilanordnung und/oder den Fluidleitungen und/oder im fluidischen Zylinder zu ermitteln. Diese dynamischen Verluste können dann bei der Bewegung des Manipulators zumindest überwiegend kompensiert werden.

Zweckmäßig ist es, wenn für die Initialisierung der Steuereinrichtung eine Ausfahrbewegung und/oder eine Einfahrbewegung des Kolbens mittels eines zyklisch veränderlichen Fluiddrucks hervorgerufen werden und die jeweils beim Übergang aus dem Stillstand des Kolbens in eine Bewegung des Kolbens ermittelten Losbrechdruckwerte in der Wertetabelle der Steuereinrichtung gespeichert werden. Beispielsweise wird für jede der Stellungen des Kolbens in dem fluidischen Zylinder sowohl ein Losbrechdruckwert zur Einleitung einer Bewegung des Kolbens aus dem Stillstand in eine erste Richtung als auch ein Losbrechdruckwert zur Einleitung einer Bewegung des Kolbens aus dem Stillstand in eine zweite Richtung ermittelt. Dies kann zudem noch für unterschiedliche Lasten vorgenommen werden, so dass anschließend für jede Stellung des Kolbens unter Berücksichtigung der Last sowohl für die eine als auch für die andere Bewegungsrichtung jeweils ein Losbrechdruckwert zur Verfügung steht, mit dessen Hilfe eine stellungsabhängige Korrektur des Drucksollwerts erfolgen kann.

Vorzugsweise wird nach der Initialisierung der Steuereinrichtung dem fluidischen Zylinder im Stillstand ein zyklisch veränderlicher Fluiddruck aufgeprägt. Durch den sich zyklisch innerhalb eines vorgebbaren Intervalls ändernden Fluiddruck wird erreicht, dass die Bedienkraft zur Einleitung einer Bewegung auf die Last zumindest zeitweilig sehr stark reduziert wird. Die Steuereinrichtung ist dazu eingerichtet, bei Einleitung einer Bedienkraft auf die Last eine entsprechende fluidische Unterstützung und damit eine Kraftverstärkung bereitzustellen. Somit wird durch den sich zyklisch ändernden Fluiddruck ein besonders komfortables "in Bewegung versetzen" für die Last gewährleistet. Der Bediener muss für jede der beiden Bewegungsrichtungen des Kolbens nur die jeweils verbleibende minimale Bedienkraft zur Überwindung der mit dem jeweiligen Losbrechdruck verknüpften Losbrechkraft zur Verfügung stellen. Eine Frequenz für den zyklisch veränderlichen Fluiddruck kann 1 bis 5 Hertz, vorzugsweise 2 bis 3 Hertz, betragen.

In weiterer Ausgestaltung der Erfindung ist vorgesehen, dass der Fluiddruck zyklisch zwischen einer unteren und einer oberen Intervallgrenze eingestellt wird, wobei die untere und/oder die obere Intervallgrenze dem jeweiligen Losbrechdruckwert für eine Einfahrbewegung oder eine Ausfahrbewegung des Kolbens entsprechen, so dass eine Losbrechkraft für den Kolben im Zylinder einen vorgebbaren Wert unterschreitet, vorzugsweise minimal ist. Durch das Oszillieren des Drucks zwischen diesen Intervallgrenzen werden in jedem Zyklus zumindest kurzeitig ein Anheben sowie kurz darauf ein Absenken der Last besonders einfach gemacht. Sowohl für das Anhaben als auch für das Absenken der Last ist zumindest kurzzeitig innerhalb des Zyklus die Bedienkraft minimal, die für eine tatsächliche Bewegungseinleitung auf die Last erforderlich ist.

Durch Berücksichtigung der Stellung des Kolbens und der Last ist stets die gleiche äußere Kraft ausreichend, um die Last in die gewünschte Richtung in Bewegung zu setzen. Liegt hingegen bereits eine Bewegung der Last vor, wird mittels der stellungsabhängigen, in der Wertetabelle abgelegten Bewegungsdruckwerte für den Kolben sichergestellt, dass Reibungsunterschiede und/oder Leckströmungsunterschiede längs des Bewegungswegs des Kolbens im fluidischen Zylinder nicht zu einer unerwünschten Abbremsung oder Beschleunigung der Last führen. Vielmehr wird für jede Stellung des Kolbens im fluidischen Zylinder eine Korrektur des Drucksollwerts vorgegeben, mit der längs des Bewegungswegs der Last stets die gleiche Verstärkung der vom Bediener aufgebrachten Bedienkraft sichergestellt ist.

Bei einer Ausgestaltung der Erfindung ist vorgesehen, dass der Losbrechdruckwert für die Einfahrbewegung oder die Ausfahrbewegung des Kolbens unter Einbeziehung der Gewichtskraft der angehängten Last und/oder der Ausfahrposition des Kolbens ermittelt wird. Dadurch kann ein Wertefeld oder ein mehrdimensionales Kennfeld erstellt werden, mit dessen Hilfe zu jeder Kolbenposition für jede Last und/oder für jede Bewegungsrichtung ein Losbrechdruckwert abgelegt ist, anhand dessen der Drucksollwert stellungsabhängig korrigiert werden kann.

Zweckmäßig ist es, wenn der Drucksollwert bei einer Bewegung des Kolbens in Abhängigkeit von der Stellung des im jeweiligen fluidischen Zylinder verschiebbar aufgenommenen Kolbens korrigiert wird. Vorzugsweise werden zur Korrektur des Drucksollwerts zusätzlich zur Stellung des Kolbens die Bewegungsgeschwindigkeit des Kolbens und/oder die Bewegungsrichtung des Kolbens und/oder die Gewichtskraft der Last berücksichtigt.

Ein Ausführungsbeispiel der Erfindung ist in der Zeichnung dargestellt und in der nachfolgenden Beschreibung näher erläutert. Es zeigen:
- Figur 1: eine schematische Darstellung einer ersten Ausführungsform eines Manipulators mit zwei Zylindern zur Unterstützung der manuellen Bewegung der Last in zwei Bewegungsrichtungen,
- Figur 2: ein Blockschaltbild einer ersten Ausführungsform einer Steuereinrichtung zur Betätigung der Ventile beziehungsweise der Ventilanordnung,
- Figur 3: eine schematische Darstellung einer zweiten Ausführungsform eines Manipulators mit zwei Zylindern zur Unterstützung der manuellen Bewegung der Last in zwei Bewegungsrichtungen,
- Figur 4: ein Blockschaltbild einer zweiten Ausführungsform einer Steuereinrichtung zur Betätigung der Ventile beziehungsweise der Ventilanordnung,
- Figur 5: ein Weg-Druck-Schaubild für Losbrechdruckwerte beim Ausfahren und beim Einfahren eines fluidischen Zylinders,
- Figur 6: ein Weg-Druck-Schaubild für Bewegungsdruckwerte beim Ausfahren und beim Einfahren eines fluidischen Zylinders, und
- Figur 7: ein Zeit-Druck-Schaubild, in dem die zyklische Druckbeaufschlagung des fluidischen Zylinders bei Stillstand des Kolbens dargestellt ist.

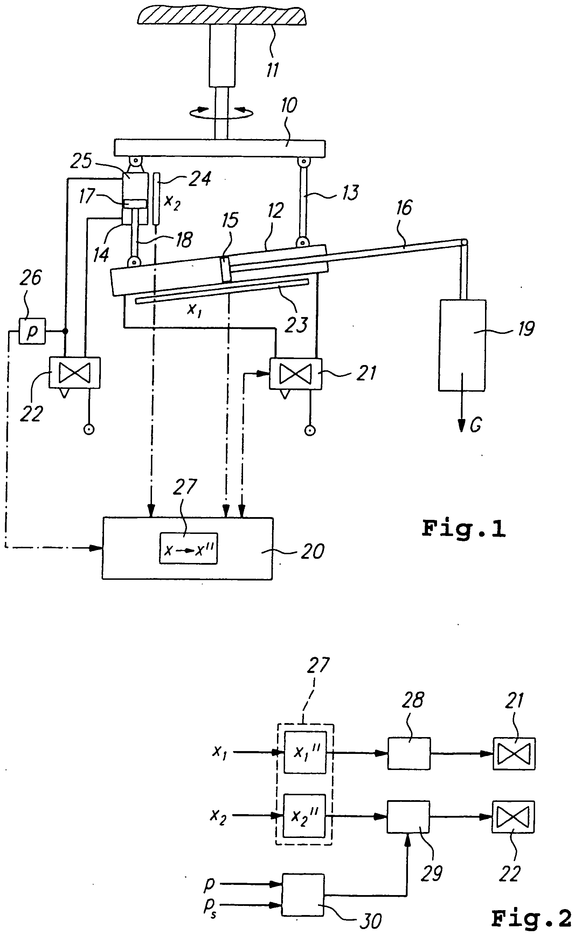

Gemäß dem in Figur 1 dargestellten ersten Ausführungsbeispiel eines fluidischen Manipulators ist ein Haltearm 10 um eine vertikale Achse dreh- beziehungsweise schwenkbar an einer Aufhängestelle 11 angebracht, bei der es sich um eine Gebäudedecke oder um ein fahrbares oder nicht fahrbares Gestell handeln kann, das beispielsweise galgenartig ausgebildet ist. An diesem Haltearm 10 ist ein erster fluidischer Zylinder 12, der im Wesentlichen horizontal ausgerichtet ist, zum einen mittels einer Haltestange 13 und zum anderen mittels eines davon beabstandeten zweiten fluidischen Zylinders 14 aufgehängt. Die Haltestange 13 und der zweite fluidische Zylinder 14 sind dabei jeweils gelenkig zwischen dem Haltearm 10 und dem ersten fluidischen Zylinder 12 angeordnet. Dies ist jedoch bei der Haltestange 13 nicht zwingend.

Eine mit einem Kolben 15 des zweiten Zylinders 14 verbundene Kolbenstange 16 greift am ersten Zylinder 12 an. Dessen mit einem Kolben 17 verbundene Kolbenstange 18 wirkt zusätzlich als Schwenkhebel für eine zu bewegende beziehungsweise zu manipulierende Last 19, die gelenkig am freien Ende der Kolbenstange 18 angebracht ist.

Der im Wesentlichen vertikal ausgerichtete zweite Zylinder 14 dient zur Unterstützung von vertikalen Bewegungen der Last 19 sowie zur Kompensation der Gewichtskraft G dieser Last 19. Der erste Zylinder 12 ist im Wesentlichen horizontal angeordnet und dient zur Unterstützung von horizontalen Bewegungen der Last 19. Infolge der horizontalen Ausrichtung ist eine Kompensation der Gewichtskraft G hier nicht erforderlich, kann jedoch vorgesehen sein, wenn der erste Zylinder 12 eine wesentliche Neigung aufweist, die eine solche Kompensation wünschenswert macht.

Eine elektronische Steuereinrichtung 20 steuert zwei beispielsweise als Proportionalventile ausgebildete Ventile 21, 22, wobei das Ventil 21 zur Druckbeaufschlagung des ersten Zylinders 12 und das Ventil 22 zur Druckbeaufschlagung des zweiten Zylinders 14 ausgebildet ist. Beide Zylinder 12, 14 sind mit Wegmesseinrichtungen 23, 24 versehen, die zur Positions- und Bewegungserfassung der Kolben 15, 17 dienen. Ihre entsprechenden Wegmesssignale X₁ und X₂ werden der Steuereinrichtung 20 zugeführt. Die druckbeaufschlagte Kammer 25 des zweiten Zylinders 14 (in Figur 1 die obere Kammer) ist mit einem Drucksensor 26 verbunden, dessen Drucksignal p ebenfalls der Steuereinrichtung 20 zugeführt wird.

Die elektronische Steuereinrichtung 20 ist beispielsweise als Mikrocontroller realisiert, kann jedoch auch als sonstige integrierte Schaltung ausgeführt sein. Enthalten ist ein Differenzierer 27, um aus den Wegsignalen X₁, X₂ der Wegmesseinrichtungen 23, 24 durch zweimaliges Differenzieren Beschleunigungssignale X₁," und X₂" zu bilden. Gemäß Figur 2 steuern diese Beschleunigungssignale X₁," und X₂" über zwei Funktionsgeneratoren 28, 29 die beiden Ventile 21, 22. Eine Druckregeleinrichtung 30 in der elektronischen Steuereinrichtung 20 regelt den Druck in der oberen Kammer des zweiten Zylinders 14, indem der im Drucksensor 26 gemessene Druck auf einen Drucksollwert pₛ geregelt wird. Dieser Drucksollwert pₛ wird so festgelegt, dass die Gewichtskraft G der Last 19 gerade ausgeglichen ist und die Last 19 dadurch quasi "schwebt". Der Drucksollwert pₛ wird entweder empirisch bestimmt oder anhand der Gewichtskraft, der Hebelverhältnisse und der Zylindereigenschaften des zweiten Zylinders 14 berechnet.

Wird die Last 19 durch einen Bediener beziehungsweise Monteur in eine Richtung bewegt, beispielsweise nach oben, so wird ein Beschleunigungssignal x₂" erzeugt, durch das im Funktionsgenerator 29 eine Druckerhöhung über das Ventil 22 bewirkt wird, das die Bewegung der Last 19 nach oben unterstützt. Entsprechend wird bei einer Bewegung der Last 19 nach unten der Druck reduziert, um auch diese Bewegung zu unterstützen. Das im Funktionsgenerator 29 erzeugte Ventilsteuersignal ist eine Funktion des Druckreglersignals der Druckregeleinrichtung 30 zur Kompensation der Gewichtskraft, indem eine Funktion des positiven oder negativen Beschleunigungssignals x₂" addiert oder subtrahiert wird.

Bei einer horizontalen Bewegung der Last 19 durch den Bediener oder Monteur wird ein Beschleunigungssignal x₁" aufgrund der Bewegung des Kolbens 15 erzeugt, die der der Last 19 entspricht. Durch dieses Beschleunigungssignal x₁" wird der Funktionsgenerator 28 gesteuert, der ein entsprechendes Steuersignal dem Ventil 21 zuführt. Bei dieser Bewegung muss je nach Richtung der Beschleunigung entweder die linke oder die rechte Kammer des Zylinders 12 mit Druck beaufschlagt werden. Das Ventil 21 ist daher zweckmäßigerweise als 5/3-Wegeventil ausgebildet oder durch eine aus mehreren Ventilen bestehende Ventilanordnung realisiert. Ein Gewichtsausgleich für die Gewichtskraft G der Last 19 ist bei einer horizontalen Bewegung nicht erforderlich, kann jedoch vorgesehen sein, wenn bei bestimmten Bewegungen der Zylinder 12 eine von der horizontalen Position wesentlich abweichende Position einnimmt. Da im zweiten Zylinder 14 nur eine Kammer mit Druck beaufschlagt werden muss, kann das Ventil 22 als einfacheres 3/2-Wegeventil ausgebildet sein. Beide Ventile 21, 22 sind als Proportionalwegeventile ausgebildet, wobei auch alternativ hierzu ein taktender Betrieb möglich wäre.

Infolge der Drehbarkeit des Haltearms 10 um eine vertikale Achse kann die Last 19 auch um diese Achse geschwenkt werden. Die Schwenkbewegung kann dabei ebenfalls fluidisch unterstützt werden, wobei ein entsprechender Zylinder zur Vereinfachung nicht dargestellt ist. Alternativ hierzu kann auch eine fluidisch unterstützte Bewegung in den beiden horizontalen Achsen vorgesehen sein.

Bei einfacheren Anwendungen der Erfindung kann auch nur die Bewegung in einer oder in zwei Raumachsen oder in einer Linearachse und einer Schwenkachse erforderlich sein, so dass sich die Anordnung entsprechend vereinfacht, wobei im einfachsten Fall nur ein dem ersten Zylinder 12 entsprechender Zylinder vorgesehen sein kann.

Die Kolbenstange 16 des ersten Zylinders 12 dient gleichzeitig als Schwenkhebel für die Last 19. Alternativ hierzu kann auch ein teleskopartiger Schwenkhebel vorgesehen sein, dessen Bewegung durch einen separaten Zylinder unterstützt wird. Weiterhin kann auch ein fester Schwenkhebel vorgesehen sein, wobei dann der Haltearm 10 oder eine entsprechende Aufhängung horizontal verschiebbar ausgebildet ist.

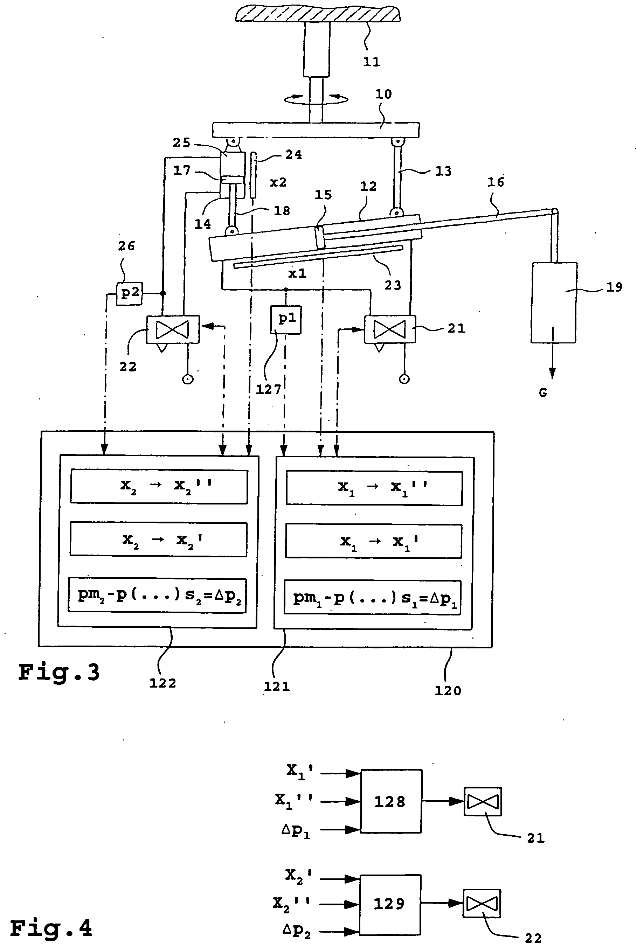

Das in den Figuren 3 und 4 dargestellte zweite Ausführungsbeispiel für einen fluidischen Manipulator weist einen ähnlichen Aufbau wie der fluidische Manipulator gemäß dem ersten Ausführungsbeispiel auf, so dass funktionsgleiche Komponenten die gleichen Bezugszeichen tragen. Der fluidische Manipulator gemäß dem zweiten Ausführungsbeispiel weist einen zusätzlichen Drucksensor 127 auf, der dem ersten Zylinder 12 zugeordnet ist. Der Drucksensor 127 ist mittels einer nicht bezeichneten Signalleitung mit einer Steuereinrichtung 120 verbunden, in der eine Signalverarbeitung von Signalen stattfindet, die von Sensoren 23, 127 des ersten Zylinders 12 und von Sensoren 24, 26 des zweiten Zylinders 14 bereitgestellt werden. Die bereitgestellten Signale werden für beide Zylinder 12, 14 in getrennt ausgebildeten Untereinheiten 121, 122 verarbeitet. In jeder der Untereinheiten 121, 122 kann wahlweise oder parallel eine Steuerung oder Regelung des Fluiddrucks im jeweiligen Zylinder 12, 14 in Abhängigkeit von den Sensorsignalen vorgenommen werden.

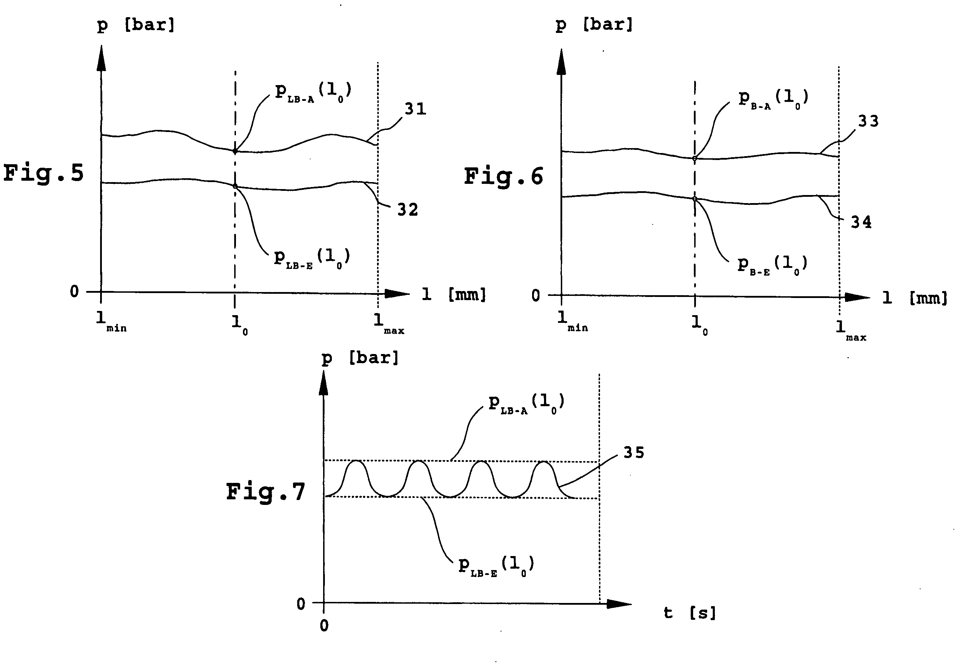

Ein aus einem nicht dargestellten mehrdimensionalen Wertefeld in Abhängigkeit von der Stellung des Kolbens 15 bzw. 17 und/oder der Gewichtskraft G der angehängten Last und/oder der Geschwindigkeit des Kolbens 15 bzw. 17 und/oder der Bewegungsrichtung des Kolbens 15 bzw. 17 entnommener Drucksollwert pₛ₁ bzw. pₛ₁ wird von einem Momentandruckwert pₘ₁ bzw. pₘ₂, der von einem der Drucksensoren 26, 127 bereitgestellt wird subtrahiert. Der aus dieser Rechenoperation resultierende Differenzdruckwert Δp₁ bzw. Δp₂ wird an den in Figur 5 dargestellten Funktionsgenerator 128 bzw. 129 bereitgestellt, der ein entsprechendes Ventilsteuersignal zur Ansteuerung des Ventils 21 bzw. 122 ausgibt. Ergänzend oder alternativ kann ein Geschwindigkeitssignal X₁' oder ein Beschleunigungssignal X₁" des ersten Zylinders 12 an den Funktionsgenerator 128 bereitgestellt werden, um eine entsprechende Ansteuerung des Ventils 21 vornehmen zu können. In diesem Fall errechnet der Funktionsgerierator 128 durch Rückgriff auf das mehrdimensionale Wertefeld einen Stellwert für das Ventil 21. In gleicher Weise gilt dies für die Werte des zweiten Zylinders 14.

In den Figuren 5 und 6 sind schematische Diagramme dargestellt, in denen jeweils der am ersten Zylinder 12 anzulegende Druck über dem Hub des Zylinders 12 aufgetragen ist. Die in der Figur 5 dargestellte Kurve 31 gibt für jede Position x des Kolbens 17 im Zylinder 12 den Losbrechdruckwert p_{LB-A} (x) an, der an der Position x bei einer gegebenen Last notwendig ist, um dem Kolben 17 aus einem Ruhezustand unter Überwindung der inneren Reibung und der äußeren Reibung in eine Ausfahrbewegung zu versetzen. Die Kurve 32 gibt dementsprechend den Losbrechdruckwert p_{LB-E} (x) an, der an der Position x bei einer gegebenen Last notwendig ist, um dem Kolben 17 aus einem Ruhezustand unter Überwindung der inneren Reibung und der äußeren Reibung in eine Einfahrbewegung zu versetzen. Da bei den vorliegenden Ausführungsbeispielen von Manipulatoren gemäß den Figur 1 und 2 bzw. 3 und 4 ein Ausfahren des Kolbens 17 aus dem Zylinder 12 mit einem Anheben der Last gleichzusetzen ist, liegt das Druckniveau für die Kurve 31 höher als das Druckniveau der Kurve 32, die das Einfahren des Kolbens 17 in den Zylinder 12 beschreibt, das mit einem Absenken der Last einhergeht. Die beiden Kurven 31 und 32 sind jeweils für die gleiche Last gültig. Bei anderen Lasten ergeben sich andere, nicht dargestellte Kurven, die zu einem nicht dargestellten Kennfeld zusammengefasst werden können, bei dem auf einer dritten Achse die Last aufgetragen ist. Aus der Figur 3 kann exemplarisch für den Hub l₀ abgelesen werden, dass für die Ausfahrbewegung ein höherer Druck p_{LB-A} (l₀) als für die Einfahrbewegung p_{LB-E} (l₀) notwendig ist.

In der Figur 6 sind Bewegungsdruckkurven 33 (P_{B-A} (x)) für das Ausfahren und 34 (p_{B-E} (x)) für das Einfahren des Kolbens 17 bei einer vorgegebenen Geschwindigkeit über dem Hub 1 aufgetragen. Beispielsweise ist beim Hub lo während einer Ausfahrbewegung und bei vorgegebener Geschwindigkeit ein Druck p_{B-A} (l₀) notwendig, um die vorgegebene Geschwindigkeit konstant beibehalten zu können. Bei entgegengesetzter Bewegung des Kolbens ist zur Beibehaltung der vorgegebenen Geschwindigkeit der Druck p_{B-E} (l₀) notwendig. Für andere Geschwindigkeiten ergeben sich andere, nicht dargestellte Bewegungsdruckkurven für das Ein- und Ausfahren des Kolbens, die in einem nicht dargestellten Kennfeld zusammengefasst werden können.

Die in der Figur 7 dargestellte Druckverlaufskurve 35 gibt an, wie der Druck bei ruhendem Kolben 17 zyklisch zwischen dem für eine vorgegebene Last gültigen Minimalwert p_{LB-E} (l₀) und dem für die gleiche Last gültigen Maximalwert p_{LB-A} (l₀) moduliert wird, um es einem Bediener zu ermöglichen, mit möglichst geringem Kraftaufwand die Last entweder abzusenken oder anzuheben. Dabei sind sowohl der Minimalwert als auch der Maximalwert als Losbrechdruckwerte derart bemessen, dass bei gegebener Last und gegebenem Hub die innere und äußere Reibung des Manipulators gerade noch nicht überwunden wird. An den jeweiligen Scheitelpunkten der Druckverlaufskurve ist nur eine geringe Bedienkraft des Bedieners erforderlich, um die Restreibung im System zu überwinden und die angehängte Last in Bewegung zu versetzen. Beispielsweise beträgt die Frequenz der Modulation 2 bis 3 Hz, so dass mehrfach innerhalb einer Sekunde sowohl eine Überwindung der minimalen Reibung zur Absenkung der Last als auch der minimalen Reibung zum Anheben der Last mit geringer Bedienkraft möglich ist.

Sobald die Last in Bewegung gesetzt worden ist, findet eine Umschaltung von der in Figur 7 dargestellten Druckverlaufskurve 35 auf eine der in Figur 6 dargestellten Bewegungsdruckkurven 33 oder 34 statt, anhand derer beispielsweise das Proportionalventil 21 gesteuert werden kann. Anhand der Bewegungsdruckkurve 33 oder 34 wird für die vom Benutzer gewünschte Geschwindigkeit der längs des Bewegungswegs des Kolbens 17 im Zylinder 12 notwendige Druck bereitgestellt, um eine gleichmäßige Bewegung der Last bewirken zu können.

## Patentansprüche

1. Manipulator zur Unterstützung der manuellen Bewegung einer Last (19) mit wenigstens einem an einer Haltevorrichtung (10, 11) für die Last (19) angreifenden und mit dieser bewegungsgekoppelten mit einer Sensoreinrichtung (23, 24) verschenen fluidischen Zylinder (12, 14) zur Unterstützung der Bewegung der Last (19) in wenigstens eine erste Bewegungsrichtung, und mit einer eine Ventilanordnung (21, 22) zur Kolbenbewegung im Zylinder (12, 14) steuernden Steuereinrichtung (20; 120), wobei die Sensoreinrichtung (23, 24) als Wegmesseinrichtung zur Messung der Position des Kolbens (15,17) des wenigstens einen Zylinders (12, 14) gegenüber dem Zylinder (12, 14) als Folge der manuell ausgelösten Beschleunigung der Last (19) ausgebildet ist und wobei Mittel (27; 121, 122) zur Bildung von Geschwindigkeitssignalen (x₁', X2') durch einmaliges Differenzieren des Wegsignals (x₁, x₂) und/oder von Beschleunigungssignalen (x₁", x₂") durch zweimaliges Differenzieren des Wegsignals (x₁, x₂) der Sensoreinrichtung (23, 24) vorgesehen sind.

2. Manipulator nach Anspruch 1, **dadurch gekennzeichnet, dass** der wenigstens eine Zylinder (12, 14) eine als Druckmesseinrichtung für den Kolben (15, 17) ausgebildete zusätzliche Sensoreinrichtung (26; 127) aufweist und dass Mittel (121; 122) zur Ermittlung einer Druckänderung durch Vergleich eines Momentandruckwerts mit einem Solldruckwert vorgesehen sind.

3. Manipulator nach Anspruch 2, **dadurch gekennzeichnet, dass** der Druck (p) im zur Unterstützung der vertikalen Bewegungen der Last (19) arbeitenden Zylinder (14) zusätzlich durch eine Lastkompensationseinrichtung (30) geregelt wird.

4. Manipulator nach Anspruch 3, **dadurch gekennzeichnet, dass** die Lastkompensationseinrichtung (30) als Druckregeleinrichtung ausgebildet ist.

5. Manipulator nach Anspruch 4, **dadurch gekennzeichnet, dass** die als Druckregeleinrichtung ausgebildete Lastkompensationseinrichtung (30) von einem Drucksollwert (pₛ) beaufschlagt ist, der zur Kompensation der Gewichtskraft (G) der Last (19) eingestellt ist.

6. Manipulator nach einem der Ansprüche 3 bis 5, **dadurch gekennzeichnet, dass** die Lastkompensationseinrichtung (30) in der elektronischen Steuereinrichtung (20; 120) integriert ist und vorzugsweise auf dieselbe Ventilanordnung (22) einwirkt.

7. Manipulator nach einem der vorhergehenden Ansprüche, **dadurch gekennzeichnet, dass** er einen Haltearm (16) zur Aufhängung der Last (19) besitzt, an dem wenigstens ein Zylinder angreift und/oder der als Kolbenstange eines Zylinders (12) ausgebildet ist.

8. Manipulator nach einem der vorhergehenden Ansprüche, **dadurch gekennzeichnet, dass** die Ventilanordnung als Proportionalventil ausgebildet ist oder wenigstens ein Proportionalventil als Ventil (12, 14) enthält.

9. Manipulator nach einem der vorhergehenden Ansprüche, **dadurch gekennzeichnet, dass** in der Steuereinrichtung (20; 120) wenigstens ein zur Ansteuerung der Ventilanordnung (21, 22) dienendes Wertefeld abgelegt ist, in dem Losbrechdruckwerte und/oder Bewegungsdruckwerte des wenigstens einen fluidischen Zylinders (12, 14) gespeichert sind, die in Abhängigkeit von der Stellung des im jeweiligen fluidischen Zylinder (12, 14) verschiebbar aufgenommenen Kolbens (15, 17) ermittelt wurden.

10. Manipulator nach Anspruch 9, **dadurch gekennzeichnet, dass** die Wertefelder in der Steuereinrichtung (20; 120) in einem mehrdimensionalen Kennfeld zusammengeführt sind.

11. Manipulator nach Anspruch 9 oder 10, **dadurch gekennzeichnet, dass** die Steuereinrichtung derart eingerichtet ist, dass in Abhängigkeit von der Stellung des im fluidischen Zylinder (12, 14) verschiebbar aufgenommenen Kolbens (15, 17) und/oder in Abhängigkeit vom Bewegungszustand des Kolbens (15, 17) eine Korrektur des Drucksollwerts (pₛ) anhand der im wenigstens einen Wertefeld abgelegten Losbrechdruckwerte oder Bewegungsdruckwerte erfolgt.

12. Verfahren zum Betreiben eines Manipulators nach einem der vorhergehenden Ansprüche, mit den Schritten: Initialisierung der Steuereinrichtung (20; 120) durch Verfahren des Kolbens (15, 17) zwischen einer Einfahrstellung und einer Ausfahrstellung mit einer vorgebbaren Prüfgeschwindigkeit und Speichern der zum Erreichen der Prüfgeschwindigkeit notwendigen Bewegungsdruckwerte in einem Wertefeld in der Steuereinrichtung (20; 120).

13. Verfahren nach Anspruch 12, **dadurch gekennzeichnet, dass** nach der Initialisierung der Steuereinrichtung (20; 120) dem fluidischen Zylinder (12, 14) im Stillstand ein zyklisch veränderlicher Fluiddruck aufgeprägt wird.

14. Verfahren nach Anspruch 13, **dadurch gekennzeichnet, dass** der Fluiddruck zyklisch zwischen einer unteren und einer oberen Intervallgrenze eingestellt wird, wobei die untere und/oder die obere Intervallgrenze dem jeweiligen Losbrechdruckwert für eine Einfahrbewegung oder eine Ausfahrbewegung des Kolbens (15, 17) entsprechen, so dass eine Losbrechkraft für den Kolben (15, 17) im Zylinder (12, 14) einen vorgebbaren Wert unterschreitet, vorzugsweise minimal ist.

## Claims

1. Manipulator for supporting the manual movement of a load (19), comprising at least one fluidic cylinder (12, 14) for supporting the movement of the load (19) in at least a first direction of movement, which cylinder (12, 14) acts on a retaining device (10, 11) for the load (19) while being coupled thereto and which cylinder (12, 14) is fitted with a sensor device (23, 24), and further comprising a control unit (20; 120) controlling a valve arrangement (21, 22) for moving a piston in the cylinder (12, 14), wherein the sensor device (23, 24) is designed as a displacement sensing device (23, 24) for measuring the position of the piston (15, 17) of the at least one cylinder (12, 14) with respect to the cylinder (12, 14) as a result of the manually triggered acceleration of the load (19), and wherein means (27; 121, 122) are provided for the generation of speed signals (x_{1'}, x_{2'}) by differentiating the position signal (x₁, x₂) of the sensor device (23, 24) once and/or for the generation of acceleration signals (x_{1"}, x_{2"}) by differentiating the position signal (x₁, x₂) of the sensor device (23, 24) twice.

2. Manipulator according to claim 1, **characterised in that** the at least one cylinder (12, 14) is provided with an additional sensor device (26; 127) designed as a pressure measuring device for the piston (15, 17), and **in that** means (121; 122) are provided for detecting a pressure change by comparing an instantaneous pressure value to a set pressure value.

3. Manipulator according to claim 2, **characterised in that** the pressure (p) in the cylinder (14) which acts to support the vertical movement of the load (19) is additionally controlled by a load compensation device (30).

4. Manipulator according to claim 3, **characterised in that** the load compensation device (30) is designed as a pressure regulating device.

5. Manipulator according to claim 4, **characterised in that** the load compensation device (30) designed as a pressure regulating device is subjected to a pressure set value (pₛ) which is set to compensate for the weight (G) of the load (19).

6. Manipulator according to any of claims 3 to 5, **characterised in that** the load compensation device (30) is integrated into the electronic control unit (20; 120) and preferably acts on the same valve arrangement (22).

7. Manipulator according to any of the preceding claims, **characterised in that** it comprises a retaining arm (16) for suspending the load (19), which retaining arm (16) is acted on by at least one cylinder and/or which retaining arm (16) is designed as a piston rod of a cylinder (12).

8. Manipulator according to any of the preceding claims, **characterised in that** the valve arrangement is designed as a proportional valve or contains at least one proportional valve as a valve (12, 14).

9. Manipulator according to any of the preceding claims, **characterised in that** at least one value field for the selection of the valve arrangement (21, 22) is stored in the control unit (20; 120), in which value field are stored breakaway pressure values and/or movement pressure values of the at least one fluidic cylinder (12, 14), which values are determined in dependence on the position of the piston (15, 17) which is displaceably accommodated in the respective fluidic cylinder (12, 14).

10. Manipulator according to claim 9, **characterised in that** the value fields are combined in the control unit (20; 120) in a multidimensional characteristic map.

11. Manipulator according to claim 9 or 10, **characterised in that** the control unit is configured such that the pressure set value (pₛ) is corrected in dependence on the position of the piston (15, 17) which is displaceably accommodated in the fluidic cylinder (12, 14) and/or in dependence on the movement state of the piston (15, 17), using the breakaway pressure values or the movement pressure values stored in the at least one value field.

12. Method for operating a manipulator according to any of the preceding claims, comprising the steps of: initialising the control unit (20; 120) by moving the piston (15, 17) between a retracted position and an extended position at a presettable test speed and storing the movement pressure values required for reaching the test speed in a value field in the control unit (20; 120).

13. Method according to claim 12, **characterised in that**, following the initialisation of the control unit (20; 120), a cyclically variable fluid pressure is applied to the fluidic cylinder (12, 14) in a stationary state.

14. Method according to claim 13, **characterised in that** the fluid pressure is varied cyclically between a lower and an upper interval limit, the lower and/or the upper interval limit(s) corresponding to the respective breakaway pressure value for a retraction movement or an extension movement of the piston (15, 17), so that a breakaway force for the piston (15, 17) in the cylinder (12, 14) is below a presettable value, preferably minimal.

## Revendications

1. Manipulateur pour l'assistance du déplacement manuel d'une charge (19) avec au moins un vérin fluidique (12, 14) se mettant en prise sur un dispositif de maintien (10, 11) pour la charge, couplé en déplacement avec elle et muni d'un dispositif de capteur (23, 24) pour assister le déplacement de la charge dans au moins une première direction de déplacement, et avec un dispositif de commande (20 ; 120) commandant un système de vanne (21, 22) pour le déplacement du piston dans le vérin (12, 14), dans lequel le dispositif de capteur (23, 24) est conformé en dispositif de mesure de course pour mesurer la position du piston (15, 17) du vérin (12, 14) au nombre d'au moins un par rapport au vérin (12, 14) en conséquence de l'accélération de la charge (19) déclenchée manuellement, et dans lequel des moyens (27 ; 121, 122) sont prévus pour former des signaux de vitesse (x1', x2') par une différenciation unique du signal de course (x1, x2) et/ou des signaux d'accélération (x1", x2") par une double différenciation du signal de course (x1, x2) du dispositif de capteur (23, 24).

2. Manipulateur selon la revendication 1, **caractérisé en ce que** le vérin (12, 14) au nombre d'au moins un présente un dispositif de capteur (26 ; 127) additionnel conformé en dispositif de mesure de pression pour le piston (15, 17) et **en ce que** des moyens (121 ; 122) sont prévus pour déterminer une variation de pression par comparaison d'une valeur momentanée de la pression avec une valeur de consigne de la pression.

3. Manipulateur selon la revendication 2, **caractérisé en ce que** la pression (p) dans le vérin (14) travaillant pour assister les déplacements verticaux de la charge (19) est régulée en plus par un dispositif (30) de compensation de charge.

4. Manipulateur selon la revendication 3, **caractérisé en ce que** le dispositif de compensation de charge (30) est conformé en dispositif de régulation de pression.

5. Manipulateur selon la revendication 4, **caractérisé en ce que** le dispositif de compensation de charge (30) conformé en dispositif de régulation de pression est exposé à une valeur de consigne (p₀) de la pression qui est réglée pour compensée le poids (G) de la charge (19).

6. Manipulateur selon l'une des revendications 3 à 5, **caractérisé en ce que** le dispositif de compensation de charge (30) est intégré dans le dispositif de commande électronique (20 ; 120) et agit de préférence sur le même système de vanne (22).

7. Manipulateur selon l'une quelconque des revendications précédentes, **caractérisé en ce qu'**il possède un bras de maintien (16) pour suspendre la charge (19), sur lequel se met en prise au moins un vérin et/ou qui est conformé en tige de piston d'un vérin (12).

8. Manipulateur selon l'une quelconque des revendications précédentes, **caractérisé en ce que** le système de vanne est conformé en vanne proportionnelle ou comprend au moins une vanne proportionnelle comme vanne (12, 14).

9. Manipulateur selon l'une quelconque des revendications précédentes, **caractérisé en ce que** dans le dispositif de commande (20 ; 120) est enregistré au moins un champ de valeurs servant à commander le système de vannes (21, 22), dans lequel sont mémorisées des valeurs de pression de déclenchement et/ou des valeurs de pression de déplacement du vérin fluidique (12, 14) au nombre d'au moins un qui ont été déterminées en fonction de la position du piston (15, 17) placé mobile dans le vérin fluidique (12, 14) concerné.

10. Manipulateur selon la revendication 9, **caractérisé en ce que** les champs de valeur sont regroupés en un champ caractéristique pluridimensionnel dans le dispositif de commande (20 ; 120).

11. Manipulateur selon la revendication 9 ou 10, **caractérisé en ce que** le dispositif de commande est agencé en sorte qu'en fonction de la position du piston (15, 17) placé mobile dans le vérin fluidique (12, 14) et/ou en fonction de l'état de déplacement du piston (15, 17), une correction de la valeur de consigne (p₀) de la pression est effectuée à l'aide des valeurs de pression de déclenchement ou de déplacement enregistrées dans le champ de valeurs au nombre d'au moins un.

12. Procédé de fonctionnement d'un manipulateur selon l'une des revendications précédentes, comprenant les étapes consistant à : initialisation du dispositif de commande (20 ; 120) par déplacement du piston (15, 17) entre un position rentrée et une position sortie avec une vitesse de contrôle prédéterminable et enregistrement des valeurs de pression de déplacement nécessaires pour atteindre la vitesse de contrôle dans un champ de valeurs dans le dispositif de commande (20 ; 120).

13. Procédé selon la revendication 12, **caractérisé en ce qu'**après l'initialisation du dispositif de commande (20 ; 120), une pression de fluide variable de manière cyclique est appliquée au vérin fluidique (12, 14) à l'arrêt.

14. Procédé selon la revendication 13, **caractérisé en ce que** la pression du fluide est réglée de manière cyclique entre une limite d'intervalle inférieure et une limite d'intervalle supérieure, la limite d'intervalle inférieure et/ou supérieure correspondant au déclenchement respectif d'un déplacement de rentrée ou d'un déplacement de sortie du piston (15, 17), de sorte qu'une force de déclenchement pur le piston (15, 17) dans le vérin (12, 14) est inférieure à une valeur prédéterminable, et est de préférence minimale.
